# EUROPÄISCHE PATENTSCHRIFT

(11) **EP 3 259 976 B1**
(45) Veröffentlichungstag und Bekanntmachung des Hinweises auf die Patenterteilung: **08.04.2020**
(21) Anmeldenummer: 17157434.6
(22) Anmeldetag: 22.02.2017
(51) Int. Cl.: A01D 43/08, A01B 67/00

(54) **LANDWIRTSCHAFTLICHE ARBEITSMASCHINE UND VERFAHREN ZUM BETRIEB EINER LANDWIRTSCHAFTLICHEN ARBEITSMASCHINE**
AGRICULTURAL WORK MACHINE AND METHOD FOR OPERATING AN AGRICULTURAL WORK MACHINE
ENGIN AGRICOLE ET PROCÉDÉ DE FONCTIONNEMENT D'UN ENGIN AGRICOLE

(30) Priorität: 24.06.2016 DE 102016111665
(43) Veröffentlichungstag der Anmeldung: 27.12.2017
(73) Patentinhaber: CLAAS Selbstfahrende Erntemaschinen GmbH, 33428 Harsewinkel (DE)
(72) Erfinder: Altmann, Claudius, 33617 Bielefeld (DE); Hohm, Robert, 48231 Warendorf (DE); Hugenroth, Ludger, 33428 Harsewinkel (DE)
(74) Vertreter: Gottschald, Jan

(56) Entgegenhaltungen:
- EP-A1- 1 306 536
- EP-A1- 1 658 765
- EP-A1- 2 434 133
- EP-A2- 2 112 357
- DE-A1-102004 042 113
- DE-A1-102007 055 073

## Beschreibung

Die vorliegende Erfindung betrifft eine landwirtschaftliche Arbeitsmaschine gemäß dem Oberbegriff von Anspruch 1 und ein Verfahren zum Betrieb einer landwirtschaftlichen Arbeitsmaschine gemäß dem Oberbegriff von Anspruch 13.

Unter einer landwirtschaftlichen Arbeitsmaschine wird jegliche Form von Arbeitsfahrzeug verstanden, das insbesondere mit einem eigenen Fahrantrieb (Antriebsachse mit Antriebsrädern) versehen ist, aber alternativ auch als Fahrzeug ohne eigenen Antrieb, beispielsweise als Hänger, ausgebildet sein kann. Nur beispielhaft erwähnt seien als landwirtschaftliche Arbeitsmaschinen Mähdrescher, Feldhäcksler oder Schlepper mit Anbauten wie Düngerstreuer, Sämaschinen, Spritzeinrichtungen, Wender, Schwader oder dergleichen.

Aus dem technischen Gebiet der Landwirtschaft ist es bekannt, verschiedene Abläufe einer landwirtschaftlichen Arbeitsmaschine automatisiert oder teilautomatisiert ablaufen zu lassen, darunter unter anderem den Betrieb und die Steuerung eines Großteils der Arbeitsaggregate der Arbeitsmaschine. Unter einem Arbeitsaggregat wird insbesondere eine landwirtschaftliche Arbeit unterstützende oder verrichtende und dadurch Leistung verbrauchende Komponente der Arbeitsmaschine verstanden. Neben den vorgenannten Anbauten sind dies unter anderem Vorsatzgeräte der Arbeitsmaschine wie Haspel oder Schneidwerk oder das Fronthubwerk zum Anheben und Absenken von Vorsatzgeräten.

Die in Rede stehenden landwirtschaftlichen Arbeitsmaschinen weisen üblicherweise eine Verbrennungskraftmaschine, insbesondere einen Dieselmotor, als gemeinsamen Antrieb für die Arbeitsaggregate und den Fahrantrieb auf. Die von der Verbrennungskraftmaschine abgegebene Leistung wird also, sofern die Arbeitsmaschine über einen Fahrantrieb verfügt, zu einem Teil dem Fahrantrieb und zu einem anderen Teil dem jeweiligen Arbeitsaggregat zugeführt.

Da der Leistungsbedarf eines Arbeitsaggregats während der landwirtschaftlichen Arbeit, beispielsweise während eines Ernteprozesses, situationsabhängig variiert - in einem Feldbereich mit relativ dichtem Feldbestand (Erntegutbestand) benötigt das Arbeitsaggregat mehr Leistung als in einem Feldbereich mit weniger dichtem Feldbestand oder im Vorgewendebereich -, ist es aus Gründen der Kraftstoffeinsparung und Verschleißreduzierung bekannt, die von der Verbrennungskraftmaschine maximal abgebbare Leistung automatisch zu verringern.

So beschreibt die DE 10 2008 020 497 A1 ein Regelungskonzept, bei dem die Verbrennungskraftmaschine abhängig vom tatsächlichen Leistungsbedarf der Arbeitsaggregate über eine Regeleinrichtung automatisch in unterschiedlichen Leistungsstufen betrieben wird, in denen die Verbrennungskraftmaschine jeweils eine andere Leistungskennlinie (Motorkennlinie) hat. Die Leistungskennlinien der Leistungsstufen unterscheiden sich in der Maximalleistung der Verbrennungskraftmaschine, die in den verschiedenen Leistungsstufen üblicherweise bei der gleichen Drehzahl erreicht wird.

Fährt eine Erntemaschine beispielsweise in einen Vorgewendebereich, ermittelt die Regeleinrichtung einen Anstieg der Drehzahl an der Abtriebswelle der Verbrennungskraftmaschine bedingt durch den verringerten Leistungsbedarf des jeweiligen Arbeitsaggregats und schaltet die Verbrennungskraftmaschine daraufhin, gegebenenfalls sogar mehrfach hintereinander, in eine niedrigere Leistungsstufe mit einer geringeren Maximalleistung. Das hat wiederum zur Folge, dass sich die Drehzahl der Abtriebswelle und gegebenenfalls auch das abgegebene Drehmoment verringert. Nach dem Durchfahren des Vorgewendebereichs fährt die Erntemaschine dann, während die Verbrennungskraftmaschine noch in der niedrigen Leistungsstufe betrieben wird, wieder in den Feldbereich mit dem zu erntenden Feldbestand, wodurch der Leistungsbedarf des jeweiligen Arbeitsaggregats wieder ansteigt. Dadurch verringert sich die Drehzahl der Abtriebswelle und die Regeleinrichtung bewirkt ein Umschalten der Verbrennungskraftmaschine, gegebenenfalls ebenfalls über mehrere Leistungsstufen hinweg, in eine höhere Leistungsstufe, damit die Verbrennungskraftmaschine wieder eine höhere Leistung zur Verfügung stellen kann.

Problematisch bei dem bekannten Regelungskonzept ist, dass beim Wiedereinfahren aus dem Vorgewendebereich in den Feldbestand eine abrupte Durchsatzänderung, insbesondere bei einer besonders hohen Dichte des Feldbestands, zu einer heftigen Regelungsreaktion führen kann, die vom Fahrer als unangenehm empfunden wird. So können hierbei Geräusche auftreten, die beim Fahrer zumindest den Eindruck erwecken, die Verbrennungskraftmaschine würde abgewürgt. Im ungünstigsten Fall kann letzteres sogar tatsächlich passieren. Die gleiche Situation kann beim Durchfahren eines Feldbereichs mit geringer Feldbestanddichte oder überhaupt keinem Feldbestand auftreten, sobald die Erntemaschine wieder in einen Feldbereich mit höherer Feldbestanddichte einfährt. Letzteres gilt auch für das Durchfahren eines liegenden Bestands.

Der Erfindung liegt das Problem zugrunde, die bekannte Arbeitsmaschine dahingehend weiterzubilden, dass eine heftige Regelungsreaktion, die vom Fahrer als unangenehm empfunden werden kann, beim Einfahren in einen Erntebestand möglichst vermieden wird.

Das obige Problem wird gemäß einer ersten Lehre der Erfindung bei einer landwirtschaftlichen Arbeitsmaschine gemäß dem Oberbegriff von Anspruch 1 durch die Merkmale des kennzeichnenden Teils von Anspruch 1 gelöst.

Die landwirtschaftliche Arbeitsmaschine, bei der es sich insbesondere um eine Erntemaschine wie einen Mähdrescher oder Feldhäcksler handelt, weist eine Verbrennungskraftmaschine und mindestens ein Arbeitsaggregat auf, dem von der Verbrennungskraftmaschine abgegebene Leistung zuführbar ist. Die Verbrennungskraftmaschine kann in verschiedenen Leistungsstufen betrieben werden, in denen sie jeweils eine andere Leistungskennlinie hat. Die Leistungsstufen, die infinitesimal klein sein können, unterscheiden sich jeweils im Verlauf der Leistung abhängig von der Drehzahl der Abtriebswelle der Verbrennungskraftmaschine und insbesondere in der von der Verbrennungskraftmaschine abgebbaren Maximalleistung.

Um die Verbrennungskraftmaschine im Betrieb zu regeln und zwischen den Leistungsstufen umzuschalten, ist ferner eine Regeleinrichtung vorgesehen. Die Regeleinrichtung dient auch zum Erzeugen bzw. Berechnen einer Prognoseinformation über den zu erwartenden Leistungsbedarf des mindestens einen Arbeitsaggregats. So erlaubt die Regeleinrichtung eine Prognose über den Leistungsbedarf, der in einem Feldbereich zu erwarten ist, in dem die Beschaffenheit, zum Beispiel die Dichte, Wuchshöhe etc., des Feldbestands um einen bestimmten Grad gegenüber einem bezogen auf die Fahrtroute vorhergehenden Feldbereich abweicht, und bewirkt bereits vor Erreichen des Feldbereichs mit der anderen Beschaffenheit eine Änderung der Leistungsstufe bzw. -kennlinie der Verbrennungskraftmaschine.

Bei dem Regelungskonzept, das der vorliegenden Erfindung zugrunde liegt, kann also eine unmittelbar bevorstehende Leistungsbedarfsänderung im Vorhinein ermittelt werden, wobei insbesondere der Zeitpunkt und Betrag der bevorstehenden Leistungsänderung prognostiziert und zur ("vorausschauenden") Regelung der Verbrennungskraftmaschine herangezogen wird. Bei einer solchen Regelung, durch die besagte Änderung (Anhebung oder Absenkung) der Leistungsstufe vor dem Erreichen des Feldbereichs mit der anderen Beschaffenheit herbeigeführt wird, können auch mehrere Leistungsstufen durchlaufen oder übersprungen werden.

Dies kann beispielsweise der Fall sein, wenn die landwirtschaftliche Arbeitsmaschine einen Vorgewendebereich oder einen Feldbereich mit vergleichsweise geringer Feldbestandsdichte (stehender Bestand mit geringerer Dichte, liegender Bestand, kein Bestand) durchfährt, dem ein dichterer bzw. regulärer Feldbestand folgt. Es ist aber auch der Fall denkbar, dass die landwirtschaftliche Arbeitsmaschine einen vergleichsweise dichten bzw. normalen Feldbestand durchfährt, dem ein Vorgewendebereich oder ein Feldbereich mit geringerer Feldbestandsdichte folgt. In beiden Fällen erlaubt die Regeleinrichtung basierend auf der Prognoseinformation ein automatisiertes Umschalten der Verbrennungskraftmaschine von einer der Leistungsstufen in eine andere der Leistungsstufen, in der die abgebbare Maximalleistung der Verbrennungskraftmaschine höher oder niedriger ist, bevor sich der Leistungsbedarf des mindestens einen Arbeitsaggregats ändert, das heißt erhöht bzw. verringert (Anspruch 3), und zwar insbesondere bevor sich die Drehzahl oder das Drehmoment an einer Abtriebswelle der Verbrennungskraftmaschine ändert (Anspruch 4).

Mit einem "Umschalten" ist im Sinne der Erfindung nicht zwingend ein Schaltvorgang eines Getriebes gemeint, sondern allgemein die Auswahl bzw. das Einstellen einer anderen (höheren oder niedrigeren) Leistungsstufe, in der die Verbrennungskraftmaschine betrieben wird. Dies kann beispielsweise durch Änderung der Einspritzmenge oder Veränderung des Kraftstoffgemisches, insbesondere des Verbrennungsluftverhältnis, erfolgen, um nur einige Beispiele zu nennen.

Wird aufgrund einer Prognoseinformation die Leistungsstufe der Verbrennungskraftmaschine erhöht, die Verbrennungskraftmaschine also so eingestellt, dass ihre abgebbare Maximalleistung höher als vorher ist, ist die neue Leistungsstufe insbesondere die Leistungsstufe, in der die abgebbare Maximalleistung der Verbrennungskraftmaschine am höchsten ist. In diesem Fall wird also immer in die höchste Leistungsstufe gewechselt, wobei insbesondere mehrere Leistungsstufen durchlaufen oder übersprungen werden.

Gemäß der Ausgestaltung der landwirtschaftlichen Arbeitsmaschine nach Anspruch 2 ist die Regeleinrichtung konfiguriert, die Prognoseinformation basierend auf mindestens einem Maschinenparameter der Arbeitsmaschine und/oder mindestens einem Umgebungsparameter zu erzeugen. Der mindestens eine Maschinenparameter ist insbesondere gewählt aus der Gruppe umfassend die (vertikale) Position des mindestens einen Arbeitsaggregats, beispielsweise die Position eines Fronthubwerks oder eines Vorsatzgerätes der Arbeitsmaschine relativ zum Boden des durchfahrenen Feldbereichs, die Fahrgeschwindigkeit der Arbeitsmaschine und das von der Verbrennungskraftmaschine abgegebene Drehmoment (Anspruch 5). Der mindestens eine Umgebungsparameter ist insbesondere gewählt aus der Gruppe umfassend die Beschaffenheit (Dichte des Ernteguts, Wuchshöhe des Ernteguts, liegende oder stehende Ausrichtung des Ernteguts) eines Feldbereichs vor und/oder hinter einer Stelle des Feldbestands, an der sich seine Beschaffenheit ändert, und den Abstand des Arbeitsaggregats zu einer Stelle des Feldbestands, an der sich seine Beschaffenheit ändert, insbesondere den Abstand des Arbeitsaggregats zum Anfang des Feldbestands, der einem Vorgewendebereich oder Feldbereich ohne Bestand folgt (Anspruch 6).

Gemäß der Ausgestaltung nach Anspruch 7 ist ferner vorgesehen, dass die Arbeitsmaschine eine Vorfelderkennungseinrichtung aufweist, die konfiguriert ist, die Umgebungsparameter zu ermitteln und an die Regeleinrichtung zu übertragen. Die Vorfelderkennungseinrichtung kann eine Kamera und/oder ein Satellitennavigationssystem aufweisen. Dies erlaubt es, Informationen bzw. Daten unter anderem über die Beschaffenheit des Feldbestands entlang einer Fahrtroute der Arbeitsmaschine und/oder über den Abstand, insbesondere den zeitlichen oder räumlichen Abstand, der Arbeitsmaschine zu dem Anfang des Feldbereichs mit der geänderten Beschaffenheit zu erhalten.

Die Regelung der Verbrennungskraftmaschine kann, wie bereits angedeutet, in unterschiedliche Richtungen erfolgen. So kann die Verbrennungskraftmaschine so regelbar sein, dass beim Umschalten der Verbrennungskraftmaschine von einer der Leistungsstufen in eine andere der Leistungsstufen das von der Verbrennungskraftmaschine abgegebene Drehmoment entweder erhöht oder verringert wird (Anspruch 9). Wird beispielsweise ein erhöhter Leistungsbedarf prognostiziert, wird vor Erreichen des den erhöhten Leistungsbedarf hervorrufenden Feldbereichs das Drehmoment erhöht, indem eine höhere Leistungsstufe eingestellt wird. Wird dagegen ein reduzierter Leistungsbedarf prognostiziert, wird vor Erreichen des den reduzierten Leistungsbedarf hervorrufenden Feldbereichs das Drehmoment verringert, indem eine niedrigere Leistungsstufe eingestellt wird. Dabei wird die Drehzahl der Verbrennungskraftmaschine, das heißt die Drehzahl der Abtriebswelle, in einem festgelegten Drehzahlbereich gehalten, was den Kraftstoffverbrauch minimiert. Dieser Drehzahlbereich, in dem das Drehmoment beim Ändern der Leistungsstufe gehalten wird, liegt insbesondere in einem Bereich von 1750 bis 1950 1/min, bevorzugt in einem Bereich von 1780 bis 1920 1/min und besonders bevorzugt in einem Bereich von 1800 bis 1900 1/min.

Gemäß der Ausgestaltung nach Anspruch 10 ist die Verbrennungskraftmaschine so regelbar, dass sie nach dem Umschalten in die andere Leistungsstufe, insbesondere in die Leistungsstufe, in der die abgebbare Maximalleistung der Verbrennungskraftmaschine am höchsten ist, in dieser Leistungsstufe nur für ein vorgegebenes Zeitintervall, insbesondere für ein Zeitintervall in einem Bereich von 1 bis 10 Sekunden, bevorzugt für ein Zeitintervall in einem Bereich von 2 bis 8 Sekunden, besonders bevorzugt für ein Zeitintervall in einem Bereich von 4 bis 6 Sekunden, betrieben wird. Das Zeitintervall beginnt dabei erfindungsgemäß, bevor das Arbeitsaggregat tatsächlich mehr Leistung bzw. weniger Leistung benötigt. Durchfährt die Arbeitsmaschine beispielsweise einen Vorgewendebereich, wird gemäß dieser Ausgestaltung eine höhere oder sogar die höchste Leistungsstufe bereits vor dem Erreichen des nachfolgenden Feldbestands eingestellt und diese Leistungsstufe solange beibehalten, bis sich die Arbeitsmaschine oder zumindest das Arbeitsaggregat im Feldbestand befindet. Nach Ablauf des vorgegebenen Zeitintervalls wird die Verbrennungskraftmaschine dann insbesondere in einen Betriebsmodus umgeschaltet, in dem die Leistung und/oder die jeweilige Leistungsstufe der Verbrennungskraftmaschine abhängig von dem tatsächlichen Leistungsbedarf eingestellt wird.

Das Arbeitsaggregat, das zur Verrichtung oder Unterstützung landwirtschaftlicher Arbeit dient, ist gemäß der Ausgestaltung nach Anspruch 11 gewählt aus der Gruppe umfassend hydraulisch angetriebene Arbeitsaggregate und rotatorisch angetriebene Arbeitsaggregate, wobei das Arbeitsaggregat insbesondere ein Vorsatzgerät der Arbeitsmaschine ist. Ein Beispiel für ein hydraulisch angetriebenes Arbeitsaggregat ist das Fronthubwerk eines Feldhäckslers oder Mähdreschers, das auch das Vorsatzgerät, beispielsweise Schneidwerk, trägt. Ein Beispiel für ein rotatorisch angetriebenes Arbeitsaggregat ist die Fördereinrichtung, mit der das Schnittgut zum Dreschwerk gefördert wird. Auch die Dreschtrommel des Dreschwerks ist ein rotatorisch angetriebenes Arbeitsaggregat.

Die landwirtschaftliche Arbeitsmaschine kann erfindungsgemäß mit einem eigenen Fahrantrieb, der eine Antriebsachse und/oder Antriebsräder umfassen kann, versehen sein, dem von der Verbrennungskraftmaschine abgegebene Leistung zuführbar ist (Anspruch 12). Die Arbeitsmaschine kann aber alternativ auch als Fahrzeug ohne eigenen Antrieb, beispielsweise als Hänger, ausgebildet sein. Im Falle des Vorhandenseins eines Fahrantriebs ist die Verbrennungskraftmaschine insbesondere so regelbar, dass beim Umschalten der Verbrennungskraftmaschine von einer der Leistungsstufen in eine andere der Leistungsstufen die Drehzahl des Fahrantriebs und damit die Fahrgeschwindigkeit im Wesentlichen konstant bleibt. "Im Wesentlichen" meint, dass die Drehzahl des Fahrantriebs und somit die Fahrgeschwindigkeit aufgrund der Beschaffenheit des Geländes (Steigung, Gefälle, rutschiger Untergrund etc.) geringfügig variieren kann, bei Annahme einer konstanten Beschaffenheit des Geländes aber konstant gehalten werden kann.

Nach einer weiteren Lehre gemäß Anspruch 13, der eigenständige Bedeutung zukommt, wird ein Verfahren zum Betrieb einer landwirtschaftlichen Arbeitsmaschine, insbesondere einer wie zuvor definierten landwirtschaftlichen Arbeitsmaschine, beansprucht, bei dem eine Verbrennungskraftmaschine, die in verschiedenen Leistungsstufen betreibbar ist, in denen sie jeweils eine andere Leistungskennlinie hat, basierend auf einer Prognoseinformation über einen zu erwartenden Leistungsbedarf des mindestens einen Arbeitsaggregats von einer der Leistungsstufen in eine andere der Leistungsstufen umgeschaltet wird, bevor sich der Leistungsbedarf des mindestens einen Arbeitsaggregats ändert.

So ist denkbar, dass, wenn die Arbeitsmaschine durch einen Feldbereich mit einem Feldbestand geringerer Dichte oder ohne Feldbestand, insbesondere einen Vorgewendebereich, fährt, die Regeleinrichtung die Verbrennungskraftmaschine vor Erreichen des nachfolgenden dichteren bzw. regulären Feldbestands in eine Leistungsstufe hochregelt, in der sie mehr Leistung abgeben und dem jeweiligen Arbeitsaggregat zur Verfügung stellen kann. Bei Erreichen des dichteren Feldbestands kann die Verbrennungskraftmaschine also soviel Leistung zur Verfügung stellen, dass es zu keinem nennenswerten Drehzahlabfall kommt und heftige Regelungsreaktionen, die den Fahrer beunruhigen könnten, vermieden werden. Entsprechend ist auch denkbar, dass, wenn die Arbeitsmaschine durch einen Feldbereich mit vergleichsweise dichtem Feldbestand fährt, dem entlang der Fahrtroute ein Feldbereich mit weniger dichtem oder überhaupt keinem Feldbestand folgt, die Regeleinrichtung die Verbrennungskraftmaschine vor Erreichen des nachfolgenden Feldbereichs in eine Leistungsstufe herunterregelt, in der sie weniger Maximalleistung zur Verfügung stellen kann, was ebenfalls heftige Regelungsreaktionen verhindert und im Übrigen den Kraftstoffverbrauch senkt.

Gemäß der Ausgestaltung des erfindungsgemäßen Verfahrens nach Anspruch 14 wird die Verbrennungskraftmaschine nach dem Umschalten in die andere Leistungsstufe für ein vorgegebenes Zeitintervall in dieser Leistungsstufe betrieben, wobei die Verbrennungskraftmaschine danach insbesondere in einem Betriebsmodus geregelt wird, in dem die Verbrennungskraftmaschine automatisch von einer der Leistungsstufen in eine andere der Leistungsstufen umgeschaltet wird, sobald sich der Leistungsbedarf des mindestens einen Arbeitsaggregats ändert.

Im Folgenden wird die Erfindung anhand einer lediglich ein Ausführungsbeispiel darstellenden Zeichnung näher erläutert. In der Zeichnung zeigt
- Fig. 1: eine landwirtschaftliche Arbeitsmaschine gemäß der vorliegenden Erfindung während des Durchfahrens eines Feldbestands,
- Fig. 2: ein Kennlinien-Diagramm der Arbeitsmaschine gemäß Fig. 1,
- Fig. 3a: eine Draufsicht auf Feldbereiche unterschiedlicher Bestandsdichte während des Durchfahrens,
- Fig. 3b: eine Darstellung der Auswahl von Leistungsstufen einer Verbrennungskraftmaschine abhängig von der Wegstrecke während des Durchfahrens der in Fig. 3a gezeigten Feldbereiche,
- Fig. 4a: eine Draufsicht auf einen Feldbereich mit regulärem Feldbestand und einen Vorgewendebereich während des Durchfahrens und
- Fig. 4b: eine Darstellung der Auswahl von Leistungsstufen einer Verbrennungskraftmaschine abhängig von der Wegstrecke während des Durchfahrens der in Fig. 4a gezeigten Feldbereiche.

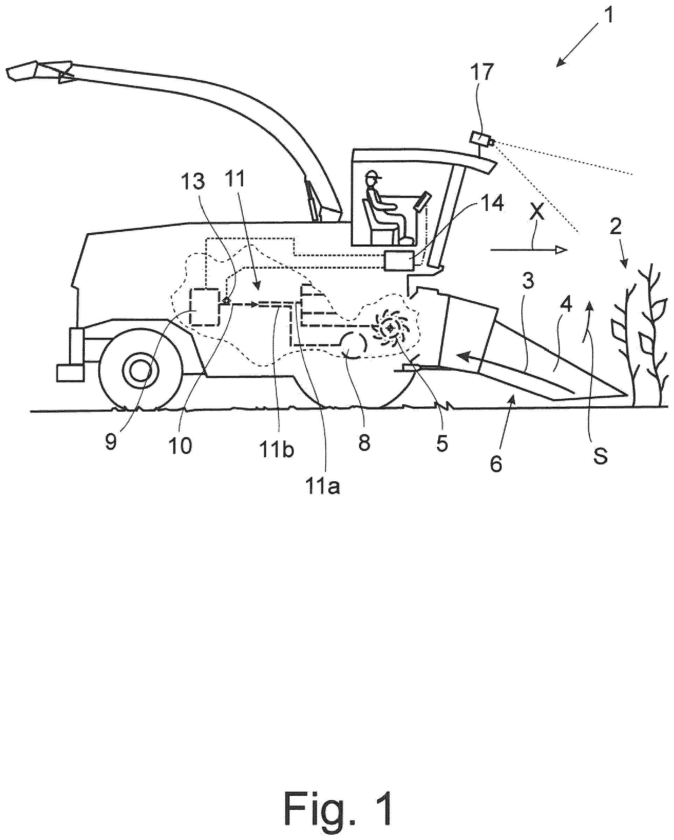

In Fig. 1 ist eine erfindungsgemäße landwirtschaftliche Arbeitsmaschine 1 in Form eines Feldhäckslers dargestellt. Die landwirtschaftliche Arbeitsmaschine 1 wird in eine Fahrtrichtung X durch einen Feldbestand 2, beispielsweise ein Maisfeld, gefahren. Ein Gutfluss 3 aus Pflanzenteilen wird während des Betriebs durch einen Einzugskanal 4 eingezogen und zum Zwecke der weiteren Zerkleinerung zu einem Arbeitsaggregat 5 in Form einer Häckslertrommel geführt. Der Einzugskanal 4 ist Bestandteil eines Vorsatzgerätes 6, das auch ein Schneidwerk (nicht dargestellt) aufweist. Das Vorsatzgerät 6 befindet sich hier in einer abgesenkten Position und kann bei Verlassen des Feldbestands 2, beispielsweise zum Durchfahren eines Vorgewendebereichs 7, in eine Schwenkrichtung S angehoben werden.

Die landwirtschaftliche Arbeitsmaschine 1 ist hier beispielhaft als selbstfahrende Erntemaschine ausgebildet und weist einen Fahrantrieb 8 mit einer Antriebsachse für Antriebsräder (nicht dargestellt) auf.

Eine Verbrennungskraftmaschine 9 dient zum Antrieb des dargestellten und weiterer (nicht dargestellter) Arbeitsaggregate 5 sowie des Fahrantriebs 8. Dabei überträgt die Verbrennungskraftmaschine 9 zur Verfügung stehende Leistung über ihre Abtriebswelle 10 an einen Antriebsstrang 11, der sich in einen zu den Arbeitsaggregaten 5 führenden, ersten Antriebsteilstrang 11a und einen zum Fahrantrieb 8 führenden zweiten Antriebsteilstrang 11b teilt.

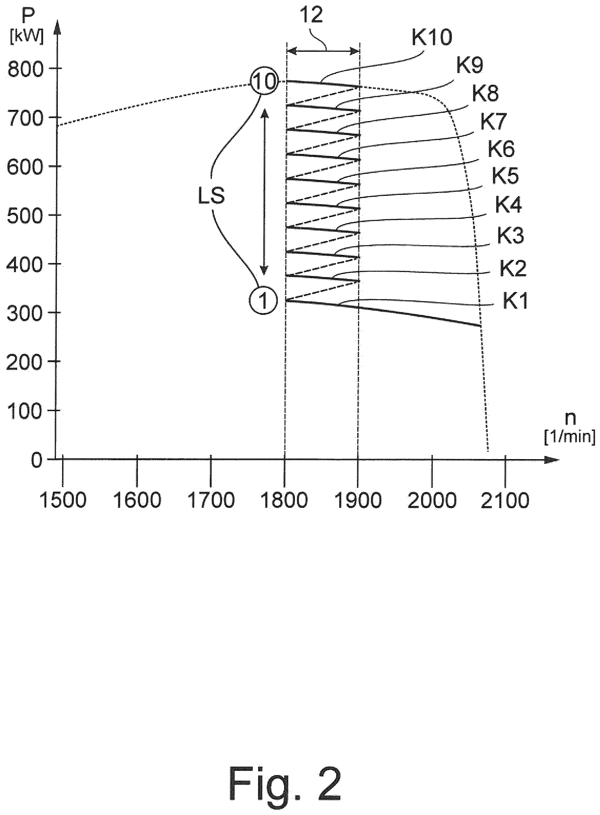

Die Verbrennungskraftmaschine 9 ist in verschiedenen Leistungsstufen LS, hier beispielhaft zehn Leistungsstufen LS, betreibbar, die in Fig. 2, 3b und 4b durch entsprechende Zahlen in einem Kreis symbolisiert sind. In jeder Leistungsstufe LS hat die Verbrennungskraftmaschine 9 eine andere Leistungskennlinie (Motorkennlinie) K₁, K₂, K₃ ... K₁₀. Die Leistungskennlinien K₁, K₂, K₃ ... K₁₀ der Leistungsstufen LS unterscheiden sich in der Leistung P, die die Verbrennungskraftmaschine 9 abhängig von der Drehzahl n an der Abtriebswelle 10 abgibt. Fig. 2 zeigt schematisch den Verlauf der den zehn Leistungsstufen LS entsprechenden Leistungskennlinien K₁, K₂, K₃ ... K₁₀ (aus Gründen der Übersichtlichkeit ist nur die Leistungskennlinie K₁₀ über den gesamten Drehzahlbereich dargestellt). Die Leistungskennlinie K₁ entspricht der niedrigsten Leistungsstufe, in der die maximal abgebbare Leistung der Verbrennungskraftmaschine 9 am niedrigsten ist und hier 325 kW beträgt, während die Leistungskennlinie K₁₀ der höchsten Leistungsstufe entspricht, in der die maximal abgebbare Leistung der Verbrennungskraftmaschine 9 am höchsten ist und hier 775 kW beträgt. Der Unterschied zwischen der maximal abgebbaren Leistung zweier nebeneinander liegender Leistungsstufen LS beträgt hier beispielsweise 45 kW, kann aber auch davon abweichen. Die maximal abgebbare Leistung wird hier immer bei derselben Drehzahl n, nämlich bei 1800 1/min, erreicht.

Zur Regelung der Verbrennungskraftmaschine 9 ist ferner eine Regeleinrichtung 14 vorgesehen. Die Regeleinrichtung 14 schaltet die Verbrennungskraftmaschine 9 abhängig vom tatsächlichen Leistungsbedarf der Arbeitsaggregate 5 zwischen den Leistungsstufen LS um, und zwar derart, dass die Fahrgeschwindigkeit bzw. Drehzahl des Fahrantriebs 8 konstant bleibt. Sobald im Betrieb der landwirtschaftlichen Arbeitsmaschine 1 aufgrund einer Änderung des Leistungsbedarfs der Arbeitsaggregate 5 die Drehzahl n der Abtriebswelle 10 der Verbrennungskraftmaschine 9 einen vorgegebenen Drehzahlbereich 12 zu verlassen droht, erfolgt ein Umschalten in die jeweils nächste Leistungsstufe LS. Die Untergrenze des Drehzahlbereichs 12 liegt gemäß dem Ausführungsbeispiel in Fig. 2 bei 1800 1/min, also der Drehzahl mit der in jeder Leistungskennlinien K₁, K₂, K₃ ... K₁₀ maximal abgebbaren Leistung. Die Obergrenze des Drehzahlbereichs 12 liegt insbesondere 40 bis 160 1/min, bevorzugt 60 bis 140 1/min, besonders bevorzugt 80 bis 120 1/min, über der Untergrenze. Hier liegt die Obergrenze des Drehzahlbereichs 12 beispielsweise 100 1/min über der Untergrenze, nämlich bei 1900 1/min. Steigt nun in einer der Leistungsstufen LS die Drehzahl n aufgrund eines reduzierten Leistungsbedarfs auf 1900 1/min, wird automatisch in die nächst niedrigere Leistungsstufe LS umgeschaltet, in der die Leistung P 45 kW niedriger und die Drehzahl n 100 1/min niedriger ist. Sinkt dagegen in einer der Leistungsstufen LS aufgrund eines erhöhten Leistungsbedarfs die Drehzahl n auf 1800 1/min, wird automatisch in die nächst höhere Leistungsstufe LS umgeschaltet, in der die Leistung P 45 kW höher und die Drehzahl n 100 1/min höher ist. Die jeweilige Drehzahl n der Abtriebswelle 10 wird dabei kontinuierlich von einem Drehzahlsensor 13 ermittelt.

Die Regeleinrichtung 14 ist außerdem erfindungsgemäß so ausgebildet, dass sie eine Prognoseinformation I über einen zu erwartenden Leistungsbedarf des oder der Arbeitsaggregat 5 erzeugen und basierend auf der Prognoseinformation I ein automatisiertes Umschalten der Verbrennungskraftmaschine 9 von einer der Leistungsstufen LS in eine andere der Leistungsstufen LS bewirken kann, bevor sich der Leistungsbedarf der Arbeitsaggregate 5 ändert. Dazu kann die Regeleinrichtung zum einen Maschinenparameter der Arbeitsmaschine 1, zum Beispiel die vertikale Position des mindestens einen Arbeitsaggregats 5, die Fahrgeschwindigkeit der landwirtschaftlichen Arbeitsmaschine 1 und/oder das von der Verbrennungskraftmaschine 9 abgegebene Drehmoment, berücksichtigen. Zum anderen können auch Umgebungsparameter berücksichtigt werden, zum Beispiel die Beschaffenheit des Feldbereichs 15 bzw. 16 vor und/oder hinter einer Stelle des Feldbestands 2, an der sich seine Beschaffenheit ändert, und/oder den Abstand des Arbeitsaggregats 5 zu einer Stelle des Feldbestands 2, an der sich seine Beschaffenheit ändert, insbesondere den Abstand des Arbeitsaggregats 5 zum Anfang eines Feldbereichs 16, der einem Vorgewendebereich 7 oder einem Feldbereich ohne Bestand folgt. Die Umgebungsparameter können dabei mittels einer Vorfelderkennungseinrichtung 17, hier in Form einer Kamera, ermittelt und an die Regeleinrichtung 14 übertragen werden.

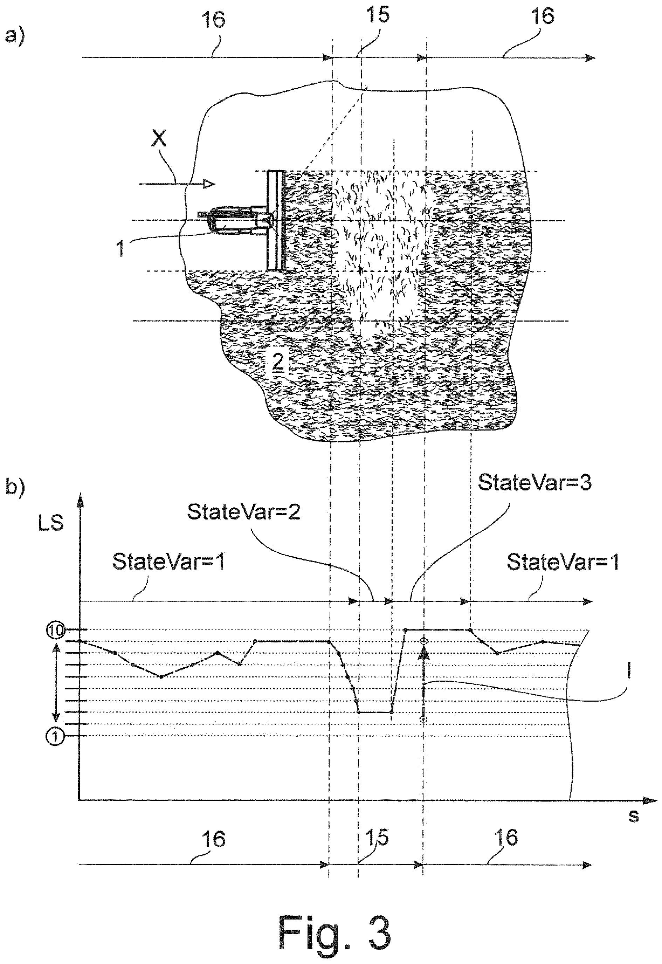

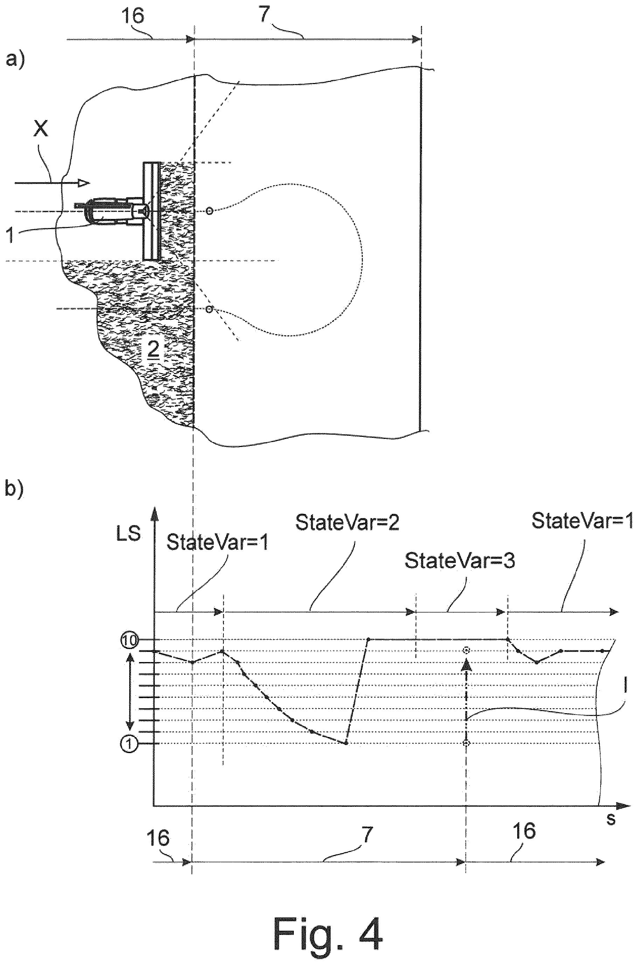

Wenn die landwirtschaftliche Arbeitsmaschine 1 beispielsweise einen Feldbereich 15 mit geringer Feldbestanddichte, insbesondere mit einem liegenden Bestand wie in Fig. 3a, einen Feldbereich ohne Bestand oder einen Vorgewendebereich 7 wie in Fig. 4a, durchfährt, dem jeweils ein dichterer bzw. regulärer Feldbestand 16 folgt, regelt die Regeleinrichtung 14 die Verbrennungskraftmaschine 9, bevor sich die Drehzahl n oder das Drehmoment an der Abtriebswelle 10 der Verbrennungskraftmaschine 9 ändert, wie folgt:
Gemäß Fig. 3b wird die Verbrennungskraftmaschine 9 in dem Feldbereich 16 mit dem vollen Feldbestand 2 in einem Betriebsmodus StateVar=1 ("Normalbetrieb") betrieben, in dem die Leistungsstufen LS abhängig vom tatsächlichen Leistungsbedarf der Arbeitsaggregate 5 gewählt werden. Der Betriebsmodus StateVar=1 wird auch am Beginn des Feldbereichs 15 mit dem liegenden Feldbestand 2 beibehalten, wobei in diesem Bereich der Leistungsbedarf abnimmt, weshalb nacheinander von der zweithöchsten in die drittniedrigste Leistungsstufe LS geschaltet wird. Die Regeleinrichtung 14 bewirkt dann beim Unterschreiten eines festgelegten Leistungsbedarfs der Arbeitsaggregate 5, von beispielsweise 25% der maximalen Motorleistung, ein Umschalten der Verbrennungskraftmaschine 9 in einen Betriebsmodus StateVar=2 ("Vorgewende"), in dem basierend auf Daten der Vorfelderkennungseinrichtung 17 eine Prognoseinformation I über einen zu erwartenden Leistungsbedarf der Arbeitsaggregate 5 erzeugt wird. Durch die Vorfelderkennungseinrichtung 17 ist auch der Abstand zum erneuten Beginn des Feldbereichs 16 mit dem vollen Feldbestand 2 bekannt, wodurch die Regeleinrichtung 14 vor Erreichen des Feldbereichs 16 automatisch einen Wechsel in den Betriebsmodus StateVar=3 (Einfahren") von der drittniedrigsten in die höchste Leistungsstufe LS bewirkt. Diese wird dann für beispielsweise 4 Sekunden beibehalten, bis anzunehmen ist, dass sich das Arbeitsaggregat 5 vollständig in dem Feldbereich 16 mit dem vollen Feldbestand 2 befindet. Nach dem vorgegebene Zeitintervall bewirkt die Regeleinrichtung 14 wieder ein Umschalten der Verbrennungskraftmaschine 9 in den Betriebsmodus StateVar=1, in dem die Leistungsstufen LS wieder abhängig vom tatsächlichen Leistungsbedarf der Arbeitsaggregate 5 gewählt werden.

Gemäß Fig. 4b wird die Verbrennungskraftmaschine 9 in dem Feldbereich 16 mit dem vollen Feldbestand 2 ebenfalls in dem Betriebsmodus StateVar=1 betrieben, in dem die Leistungsstufen LS abhängig vom tatsächlichen Leistungsbedarf der Arbeitsaggregate 5 gewählt werden. Wird der Vorgewendebereich 7 erreicht und das Vorsatzgerät 6 angehoben, bewirkt die Regeleinrichtung 14 ein Umschalten der Verbrennungskraftmaschine 9 zunächst in einen Betriebsmodus StateVar=2 ("Vorgewende"), in dem durch die Vorfelderkennungseinrichtung 17 der Abstand zum Beginn des Feldbereichs 16 mit dem vollen Feldbestand 2 ermittelt wird und die Regeleinrichtung 14 vor dem Zeitpunkt, in dem das Vorsatzgerät 6 vor Eintritt in den Feldbestand 2 wieder abgesenkt werden muss, automatisch einen Wechsel von der niedrigsten in die höchste Leistungsstufe LS bewirkt. Anschließend bewirkt die Regeleinrichtung 14 ein Umschalten der Verbrennungskraftmaschine 9 in den Betriebsmodus StateVar=3, und zwar immer noch vor dem Eintritt in den Feldbereich 16, wobei in dem Betriebsmodus StateVar=3 die bereits zuvor eingestellte höchste Leistungsstufe LS für beispielsweise weitere 4 Sekunden beibehalten wird, bis anzunehmen ist, dass sich das Arbeitsaggregat 5 vollständig in dem Feldbereich 16 mit dem vollen Feldbestand 2 befindet. Nach dem vorgegebenen Zeitintervall bewirkt die Regeleinrichtung 14 wieder ein Umschalten der Verbrennungskraftmaschine 9 in den Betriebsmodus StateVar=1, in dem die Leistungsstufen LS wieder abhängig vom tatsächlichen Leistungsbedarf der Arbeitsaggregate 5 gewählt werden.

### Bezugszeichen

- 1: landwirtschaftliche Arbeitsmaschine
- 2: Feldbestand
- 3: Gutfluss
- 4: Einzugskanal
- 5: Arbeitsaggregate
- 6: Vorsatzgerät
- 7: Vorgewendebereich
- 8: Fahrantrieb
- 9: Verbrennungskraftmaschine
- 10: Abtriebswelle
- 11: Antriebsstrang
- 11a: erster Antriebsteilstrang
- 11b: zweiter Antriebsteilstrang
- 12: Drehzahlbereich
- 13: Drehzahlsensor
- 14: Regeleinrichtung
- 15: Feldbereich mit geringer Bestandsdichte
- 16: Feldbereich mit vollem Bestand
- 17: Vorfelderkennungseinrichtung
- I: Prognoseinformation
- X: Fahrtrichtung
- s: Wegstrecke
- S: Schwenkrichtung
- P: Leistung
- n: Drehzahl
- LS: Leistungsstufen
- K₁...K₁₀: Leistungskennlinien

## Patentansprüche

1. Landwirtschaftliche Arbeitsmaschine (1), insbesondere Erntemaschine, wobei eine Verbrennungskraftmaschine (9) vorgesehen ist, die in verschiedenen Leistungsstufen (LS) betreibbar ist, in denen sie jeweils eine andere Leistungskennlinie (K₁, K₂,... K₁₀) hat, wobei mindestens ein Arbeitsaggregat (5) vorgesehen ist, dem von der Verbrennungskraftmaschine (9) abgegebene Leistung (P) zuführbar ist, und wobei eine Regeleinrichtung (14) vorgesehen ist, die konfiguriert ist, die Verbrennungskraftmaschine (9) zu regeln,
**dadurch gekennzeichnet,**
**dass** die Regeleinrichtung (14) konfiguriert ist, über einen zu erwartenden Leistungsbedarf des mindestens einen Arbeitsaggregats (5) eine Prognoseinformation (I) zu erzeugen und basierend auf der Prognoseinformation (I) ein automatisiertes Umschalten der Verbrennungskraftmaschine (9) von einer der Leistungsstufen (LS) in eine andere der Leistungsstufen (LS) zu bewirken, bevor sich der Leistungsbedarf des mindestens einen Arbeitsaggregats (5) ändert, und dass die Prognoseinformation (I) eine Prognose über den Leistungsbedarf, der in einem Feldbereich (15, 16) zu erwarten ist, in dem die Beschaffenheit des Feldbestands (2) um einen bestimmten Grad gegenüber einem bezogen auf die Fahrtroute vorhergehenden Feldbereich (15, 16) abweicht, umfasst.

2. Landwirtschaftliche Arbeitsmaschine (1) nach Anspruch 1, **dadurch gekennzeichnet, dass** die Regeleinrichtung (14) konfiguriert ist, die Prognoseinformation (I) basierend auf mindestens einem Maschinenparameter der Arbeitsmaschine (1) und/oder mindestens einem Umgebungsparameter zu erzeugen.

3. Landwirtschaftliche Arbeitsmaschine (1) nach Anspruch 1 oder 2, **dadurch gekennzeichnet, dass** die Regeleinrichtung (14) konfiguriert ist, basierend auf der Prognoseinformation (I) ein automatisiertes Umschalten der Verbrennungskraftmaschine (9) von einer der Leistungsstufen (LS) in eine andere der Leistungsstufen (LS) zu bewirken, in der die abgebbare Maximalleistung der Verbrennungskraftmaschine (9) höher oder niedriger ist.

4. Landwirtschaftliche Arbeitsmaschine (1) nach einem der vorhergehenden Ansprüche, **dadurch gekennzeichnet, dass** die Regeleinrichtung (14) konfiguriert ist, das Umschalten der Verbrennungskraftmaschine (9) von einer der Leistungsstufen (LS) in eine andere der Leistungsstufen (LS) zu bewirken, bevor sich die Drehzahl (n) oder das Drehmoment an einer Abtriebswelle (10) der Verbrennungskraftmaschine (9) ändert.

5. Landwirtschaftliche Arbeitsmaschine (1) nach einem der Ansprüche 2 bis 4, **dadurch gekennzeichnet, dass** der mindestens eine Maschinenparameter gewählt ist aus der Gruppe umfassend
- die Position des mindestens einen Arbeitsaggregats (5),
- die Fahrgeschwindigkeit der Arbeitsmaschine (1) und
- das von der Verbrennungskraftmaschine (9) abgegebene Drehmoment.

6. Landwirtschaftliche Arbeitsmaschine (1) nach einem der Ansprüche 2 bis 5, **dadurch gekennzeichnet, dass** der mindestens eine Umgebungsparameter gewählt ist aus der Gruppe umfassend
- die Beschaffenheit des Feldbereichs (7, 15, 16) vor und/oder hinter einer Stelle des Feldbestands (2), an der sich seine Beschaffenheit ändert, und
- den Abstand des Arbeitsaggregats (5) zu einer Stelle des Feldbestands (2), an der sich seine Beschaffenheit ändert, insbesondere den Abstand des Arbeitsaggregats (5) zum Anfang eines Feldbereichs (16), der einem Vorgewendebereich (7) oder Feldbereich ohne Bestand folgt.

7. Landwirtschaftliche Arbeitsmaschine (1) nach einem der Ansprüche 2 bis 6, **dadurch gekennzeichnet, dass** sie eine Vorfelderkennungseinrichtung (17) aufweist, die konfiguriert ist, die Umgebungsparameter zu ermitteln und an die Regeleinrichtung (14) zu übertragen.

8. Landwirtschaftliche Arbeitsmaschine (1) nach Anspruch 7, **dadurch gekennzeichnet, dass** die Vorfelderkennungseinrichtung (17) eine Kamera und/oder ein Satellitennavigationssystem aufweist.

9. Landwirtschaftliche Arbeitsmaschine (1) nach einem der vorhergehenden Ansprüche, **dadurch gekennzeichnet, dass** die Verbrennungskraftmaschine (9) so regelbar ist, dass beim Umschalten der Verbrennungskraftmaschine (9) von einer der Leistungsstufen (LS) in eine andere der Leistungsstufen (LS) das von der Verbrennungskraftmaschine (9) abgegebene Drehmoment erhöht oder verringert wird.

10. Landwirtschaftliche Arbeitsmaschine (1) nach einem der vorhergehenden Ansprüche, **dadurch gekennzeichnet, dass** die Verbrennungskraftmaschine (9) so regelbar ist, dass sie nach dem Umschalten in die andere Leistungsstufe (LS), insbesondere in die Leistungsstufe (LS), in der die abgebbare Maximalleistung der Verbrennungskraftmaschine (9) am höchsten ist, in dieser Leistungsstufe (LS) nur für ein vorgegebenes Zeitintervall, insbesondere für ein Zeitintervall in einem Bereich von 1 bis 10 Sekunden, bevorzugt für ein Zeitintervall in einem Bereich von 2 bis 8 Sekunden, besonders bevorzugt für ein Zeitintervall in einem Bereich von 4 bis 6 Sekunden, betrieben wird.

11. Landwirtschaftliche Arbeitsmaschine (1) nach einem der vorhergehenden Ansprüche, **dadurch gekennzeichnet, dass** das Arbeitsaggregat (5) gewählt ist aus der Gruppe umfassend hydraulisch angetriebene Arbeitsaggregate (5) und rotatorisch angetriebene Arbeitsaggregate (5), wobei das Arbeitsaggregat (5) insbesondere ein Vorsatzgerät (6) der Arbeitsmaschine (1) ist.

12. Landwirtschaftliche Arbeitsmaschine (1) nach einem der vorhergehenden Ansprüche, **dadurch gekennzeichnet, dass** sie einen Fahrantrieb (8) aufweist, dem von der Verbrennungskraftmaschine (9) abgegebene Leistung (P) zuführbar ist, wobei die Verbrennungskraftmaschine (9) so regelbar ist, dass beim Umschalten der Verbrennungskraftmaschine (9) von einer der Leistungsstufen (LS) in eine andere der Leistungsstufen (LS) die Drehzahl des Fahrantriebs (8) im Wesentlichen konstant bleibt.

13. Verfahren zum Betrieb einer landwirtschaftlichen Arbeitsmaschine (1) nach einem der vorhergehenden Ansprüche, bei dem eine Verbrennungskraftmaschine (9), die in verschiedenen Leistungsstufen (LS) betreibbar ist, in denen sie jeweils eine andere Leistungskennlinie (K₁, K₂,... K₁₀) hat, basierend auf einer Prognoseinformation (I) über einen zu erwartenden Leistungsbedarf des mindestens einen Arbeitsaggregats (5) von einer der Leistungsstufen (LS) in eine andere der Leistungsstufen (LS) umgeschaltet wird, bevor sich der Leistungsbedarf des mindestens einen Arbeitsaggregats (5) ändert.

14. Verfahren nach Anspruch 13, **dadurch gekennzeichnet, dass** die Verbrennungskraftmaschine (9) nach dem Umschalten in die andere Leistungsstufe (LS) für ein vorgegebenes Zeitintervall in dieser Leistungsstufe (LS) betrieben wird, wobei die Verbrennungskraftmaschine (9) danach insbesondere in einem Betriebsmodus geregelt wird, in dem die Verbrennungskraftmaschine (9) automatisch von einer der Leistungsstufen (LS) in eine andere der Leistungsstufen (LS) umgeschaltet wird, sobald sich der Leistungsbedarf des mindestens einen Arbeitsaggregats (5) ändert.

## Claims

1. Agricultural working machine (1), in particular harvesting machine, wherein an internal combustion engine (9) is provided which can be operated at different power levels (LS), at each of which it has a different power characteristic curve (K₁, K₂,... K₁₀), wherein at least one working unit (5) is provided, to which power (P) output by the internal combustion engine (9) can be supplied, and wherein a control device (14) is provided, which is configured to control the internal combustion engine (9),
**characterized in that**
the control device (14) is configured to generate forecast information (I) about a power demand of the at least one working unit (5) that is to be expected and, on the basis of the forecast information (I), to effect automatic switching of the internal combustion engine (9) from one of the power levels (LS) to another of the power levels (LS) before the power demand of the at least one working unit (5) changes, and **in that** the forecast information (I) comprises a forecast about the power demand which is to be expected in a field area (15, 16) in which the nature of the crop (2) differs by a specific amount with respect to a preceding field area (15, 16) relative to the travel route.

2. Agricultural working machine (1) according to Claim 1, **characterized in that** the control device (14) is configured to generate the forecast information (I) on the basis of at least one machine parameter of the working machine (1) and/or at least one environmental parameter.

3. Agricultural working machine (1) according to Claim 1 or 2, **characterized in that** the control device (14) is configured, on the basis of the forecast information (I), to effect automatic switching of the internal combustion engine (9) from one of the power levels (LS) to another of the power levels (LS), at which the maximum power that can be output by the internal combustion engine (9) is higher or lower.

4. Agricultural working machine (1) according to one of the preceding claims, **characterized in that** the control device (14) is configured to effect the switching of the internal combustion engine (9) from one of the power levels (LS) to another of the power levels (LS) before the rotational speed (n) or the torque on an output shaft (10) of the internal combustion engine (9) changes.

5. Agricultural working machine (1) according to one of Claims 2 to 4, **characterized in that** the at least one machine parameter is selected from the group comprising
- the position of the at least one working unit (5),
- the speed of travel of the working machine (1), and
- the torque output by the internal combustion engine (9).

6. Agricultural working machine (1) according to one of Claims 2 to 5, **characterized in that** the at least one environmental parameter is selected from the group comprising
- the nature of the field area (7, 15, 16) in front of and/or behind a location of the crop (2) at which its nature changes, and
- the distance of the working unit (5) to a location of the crop (2) at which its nature changes, in particular the distance of the working unit (5) to the start of a field area (16) which follows a headland (7) or field area without crop.

7. Agricultural working machine (1) according to one of Claims 2 to 6, **characterized in that** it has a headland detection device (17) which is configured to determine the environmental parameters and transmit them to the control device (14).

8. Agricultural working machine (1) according to Claim 7, **characterized in that** the headland detection device (17) has a camera and/or a satellite navigation system.

9. Agricultural working machine (1) according to one of the preceding claims, **characterized in that** the internal combustion engine (9) can be controlled such that when switching the internal combustion engine (9) from one of the power levels (LS) to another of the power levels (LS), the torque output by the internal combustion engine (9) is increased or reduced.

10. Agricultural working machine (1) according to one of the preceding claims, **characterized in that** the internal combustion engine (9) can be controlled such that after switching to the other power level (LS), in particular to the power level (LS) at which the maximum power that can be output by the internal combustion engine (9) is at a maximum, it is operated at this power level (LS) only for a predefined time interval, in particular for a time interval in a range from 1 to 10 seconds, preferably for a time interval in a range from 2 to 8 seconds, particularly preferably for a time interval in a range from 4 to 6 seconds.

11. Agricultural working machine (1) according to one of the preceding claims, **characterized in that** the working unit (5) is selected from the group comprising hydraulically driven working units (5) and rotationally driven working units (5), wherein the working unit (5) is in particular an attachment (6) of the working machine (1).

12. Agricultural working machine (1) according to one of the preceding claims, **characterized in that** it has a traction drive (8), to which power (P) output by the internal combustion engine (9) can be supplied, wherein the internal combustion engine (9) can be controlled such that when switching the internal combustion engine (9) from one of the power levels (LS) to another of the power levels (LS), the rotational speed of the traction drive (8) remains substantially constant.

13. Method for operating an agricultural working machine (1) according to one of the preceding claims, in which an internal combustion engine (9) which can be operated at different power levels (LS), at each of which it has a different power characteristic curve (K₁, K₂,... K₁₀), is switched from one of the power levels (LS) to another of the power levels (LS) on the basis of forecast information (I) about a power demand of the at least one working unit (5) that is to be expected, before the power demand of the at least one working unit (5) changes.

14. Method according to Claim 13, **characterized in that** after switching to the other power level (LS), the internal combustion engine (9) is operated at this power level (LS) for a predefined time interval, wherein the internal combustion engine (9) is thereafter operated in particular in an operating mode in which the internal combustion engine (9) is automatically switched from one of the power levels (LS) to another of the power levels (LS) as soon as the power demand of the at least one working unit (5) changes.

## Revendications

1. Machine de travail agricole (1), notamment récolteuse, un moteur à combustion interne (9) étant présent, lequel peut fonctionner à différents niveaux de puissance (LS) dans lesquels il possède respectivement une courbe caractéristique de puissance (K₁, K₂, ..., K₁₀) différente, au moins un groupe de travail (5) étant présent, auquel peut être acheminée la puissance (P) délivrée par le moteur à combustion interne (9), et un dispositif de régulation (14) étant présent, lequel est configuré pour réguler le moteur à combustion interne (9),
**caractérisée en ce**
**que** le dispositif de régulation (14) est configuré pour générer une information prévisionnelle (I) à propos d'une puissance requise attendue de l'au moins un groupe de travail (5) et, en se basant sur l'information prévisionnelle (1), provoquer une permutation automatisée du moteur à combustion interne (9) de l'un des niveaux de puissance (LS) à un autre des niveaux de puissance (LS) avant que la puissance requise de l'au moins un groupe de travail (5) change, et **en ce que** l'information prévisionnelle (I) comprend une prévision à propos de la puissance requise qui est attendue dans une zone de champ (15, 16) dans laquelle la nature de la culture (2) diverge d'un degré déterminé par rapport à une zone de champ (15, 16) précédente en référence à l'itinéraire de déplacement.

2. Machine de travail agricole (1) selon la revendication 1, **caractérisée en ce que** le dispositif de régulation (14) est configuré pour générer l'information prévisionnelle (I) en se basant sur au moins un paramètre de machine de la machine de travail (1) et/ou au moins un paramètre d'environnement.

3. Machine de travail agricole (1) selon la revendication 1 ou 2, **caractérisée en ce que** le dispositif de régulation (14) est configuré pour, en se basant sur l'information prévisionnelle (I), provoquer une permutation automatisée du moteur à combustion interne (9) de l'un des niveaux de puissance (LS) à un autre des niveaux de puissance (LS) dans lequel la puissance maximale pouvant être délivrée du moteur à combustion interne (9) est plus élevée ou plus faible.

4. Machine de travail agricole (1) selon l'une des revendications précédentes, **caractérisée en ce que** le dispositif de régulation (14) est configuré pour provoquer la permutation du moteur à combustion interne (9) de l'un des niveaux de puissance (LS) à un autre des niveaux de puissance (LS) avant que la vitesse de rotation (n) ou le couple au niveau d'un arbre de sortie (10) du moteur à combustion interne (9) change.

5. Machine de travail agricole (1) selon l'une des revendications 2 à 4, **caractérisée en ce que** l'au moins un paramètre de machine est choisi dans le groupe comprenant
- la position de l'au moins un groupe de travail (5),
- la vitesse de déplacement de la machine de travail (1) et
- le couple délivré par le moteur à combustion interne (9).

6. Machine de travail agricole (1) selon l'une des revendications 2 à 5, **caractérisée en ce que** l'au moins un paramètre d'environnement est choisi dans le groupe comprenant
- la nature de la zone de champ (7, 15, 16) devant et/ou derrière un endroit de la culture (2) au niveau duquel sa nature change, et
- la distance entre le groupe de travail (5) et un endroit de la culture (2) au niveau duquel sa nature change, notamment la distance entre le groupe de travail (5) et le début d'une zone de champ (16) qui suit une zone de tournière (7) ou une zone de champ sans culture.

7. Machine de travail agricole (1) selon l'une des revendications 2 à 6, **caractérisée en ce qu'**elle possède un dispositif de reconnaissance d'aire de manœuvre (17) qui est configuré pour identifier le paramètre d'environnement et le communiquer au dispositif de régulation (14).

8. Machine de travail agricole (1) selon la revendication 7, **caractérisée en ce que** le dispositif de reconnaissance d'aire de manœuvre (17) possède une caméra et/ou un système de navigation par satellite.

9. Machine de travail agricole (1) selon l'une des revendications précédentes, **caractérisée en ce que** le moteur à combustion interne (9) peut être régulé de telle sorte que lors de la permutation du moteur à combustion interne (9) de l'un des niveaux de puissance (LS) à un autre des niveaux de puissance (LS), le couple délivré par le moteur à combustion interne (9) est augmenté ou réduit.

10. Machine de travail agricole (1) selon l'une des revendications précédentes, **caractérisée en ce que** le moteur à combustion interne (9) peut être régulé de telle sorte qu'après la permutation à l'autre niveau de puissance (LS), notamment au niveau de puissance (LS) dans lequel la puissance maximale moteur à combustion interne (9) pouvant être délivrée est la plus élevée, il fonctionne à ce niveau de puissance (LS) seulement pendant un intervalle de temps prédéfini, notamment pendant un intervalle de temps dans une plage de 1 à 10 secondes, de préférence pendant un intervalle de temps dans une plage de 2 à 8 secondes, notamment de préférence pendant un intervalle de temps dans une plage de 4 à 6 secondes.

11. Machine de travail agricole (1) selon l'une des revendications précédentes, **caractérisée en ce que** le groupe de travail (5) est sélectionné dans le groupe comprenant des groupes de travail (5) à entraînement hydraulique et des groupes de travail (5) entraînés en rotation, le groupe de travail (5) étant notamment un appareil rapporté (6) de la machine de travail (1).

12. Machine de travail agricole (1) selon l'une des revendications précédentes, **caractérisée en ce qu'**elle possède un mécanisme d'entraînement de déplacement (8), auquel peut être acheminée de la puissance (P) délivrée par le moteur à combustion interne (9), le moteur à combustion interne (9) pouvant être régulé de telle sorte que lors de la permutation du moteur à combustion interne (9) de l'un des niveaux de puissance (LS) à un autre des niveaux de puissance (LS), la vitesse de rotation du mécanisme d'entraînement de déplacement (8) reste sensiblement constante.

13. Procédé pour faire fonctionner une machine de travail agricole (1) selon l'une des revendications précédentes, avec lequel un moteur à combustion interne (9), qui peut fonctionner à différents niveaux de puissance (LS) dans lesquels il possède respectivement une courbe caractéristique de puissance (K₁, K₂, ..., K₁₀) différente, est permuté de l'un des niveaux de puissance (LS) à un autre des niveaux de puissance (LS) sur la base d'une information prévisionnelle (I) à propos d'une puissance requise attendue de l'au moins un groupe de travail (5) avant que la puissance requise de l'au moins un groupe de travail (5) change.

14. Procédé selon la revendication 13, **caractérisé en ce que** le moteur à combustion interne (9), après la permutation à l'autre niveau de puissance (LS), fonctionne à ce niveau de puissance (LS) pendant un intervalle de temps prédéfini, le moteur à combustion interne (9) étant ensuite notamment régulé dans un mode de fonctionnement dans lequel le moteur à combustion interne (9) est permuté automatiquement de l'un des niveaux de puissance (LS) à un autre des niveaux de puissance (LS) dès que la puissance requise de l'au moins un groupe de travail (5) change.
